# EUROPEAN PATENT APPLICATION

(11) **EP 0 536 435 A1**
(43) Date of publication of application: **14.04.1993**
(21) Application number: 91117206.2
(22) Date of filing: 09.10.1991
(51) Int. Cl.: B60Q 1/32, B60Q 1/26, F21Q 1/00

(54) **Multi-functional warning system for cars**

(71) Applicant: Chen, Liang-Tsai, Kaoshiung (TW)
(72) Inventor: Chen, Liang-Tsai, Kaoshiung (TW)

(57) **Abstract**

A multi-functional warning system for cars comprises a main module 10 secured to a car door 1 adjacent to an edge thereof, and an auxiliary module 60 secured to the car body 2 and adjacent with the main module 10, when the car door 1 is in a closed position. The main module 10 comprises a main casing 11, a support assembly 20, a convex lens plate 30, a printed circuit board 40 and a buzzer 50. The support assembly 20 is disposed within the main casing 11. The convex lens plate 30 is disposed on the rear portion of the main casing 11. The printed circuit board 40 has a switch set 402, a plurality of resistors 411, capacitors 412, switching transistors 413 and light-emitted diodes 421.

## Description

### Background of the Present Invention

The present invention relates to a car door closure warning system and more particularly to a multi-functional warning system for cars that provides impact protection to a car door and can act as an emergency warning light.

Though car door closure warning systems have been provided in the past, most were integrally mounted with the motor vehicle or were limited to that particular function.

### Summary of the Present Invention

The main objective of the present invention is to provide a multi-functional warning system for cars that delivers both audible and visible warning signals of an improperly closed car door, with a second objective of providing an impact guard for the car door to which it is mounted, and a third objective of providing an emergency warning light that is readily available to a user.

The multi-functional warning system for cars of the present invention is an independant unit that provides a number of functions. Moreover, it can be manufactured from inexpensive components and mounted on the exterior of a car body without the need of any extraneous tools.

The multi-functional warning system for cars of the present invention comprises an auxiliary module and a main module mounted adjacently on the edge of a car door and an adjacent body panel.

If the car door is improperly closed and ajar with the adjacent body panel, audible and visible warning signals are issued by the main module.

An improperly closed car door would, of course, post a safety hazard to the passengers, possibly coming open while the motor vehicle is moving, and makes the vehicle vulnerable to theft.

As the auxiliary module protrudes from the side of the car door, it also serves to protect the edge of the car door against impact, of the type that commonly occurs when a passenger is opening the door from the interior of the vehicle and strikes an external object such as a wall or pole, etc.

Both the modules are mounted to the car body by adhesive pads, requiring no hand tools. As such, the main module can be manually removed and re-mounted on another portion of the car body, where it will automatically issue visible and audible warnings acting as an emergency warning system.

Also as a result of the mounting method, if perchance a glancing collision occurs between the two modules and a foreign object, as could occur when driving through a narrow passage, the two modules would simply shear off without incurring damage to the vehicle. The collision would also warn the driver to take action before contact with the car body occurs.

### A Brief Description of the Drawings

Fig.1 is a perspective view of a disassembled main module and an auxiliary module of the multi-functional warning system for cars of the present invention.

Fig.2 is a top view of a main module and an auxiliary module of the multi-functional warning system for cars of the present invention.

Fig.3 is a rear view of Fig.2.

Fig.4 is a close-up view of a mounted multi-functional warning system for cars of the present invention.

Fig.5 is an electrical circuit diagram of the multi-functional warning system for cars of the present invention.

Fig.6 is a rear view of the main module and an auxiliary module of the multi-functional warning system for cars of the present invention.

Fig.7 is a partly cross-sectional, rear view of a main casing of the persent invention.

Fig.8 is a front view of a casing of the present invention.

Fig.9 is a rear view of a support assembly of the present invention.

Fig.10 is a top view of a support assembly of the present invention.

Fig.11 is a plan view of an auxiliary module without the magnetic casing of the present invention.

Fig.12 is a plan view of a magnetic casing with a magnetic therein of the persent invention.

Fig.13 is a schematic view of assemblying an auxiliary module of the present invention.

Fig.14 is a schematic view showing the multi-functional warning system for cars of the present invention disposed on the trunk lid of a car.

### Preferred Embodiment of The Present Invention

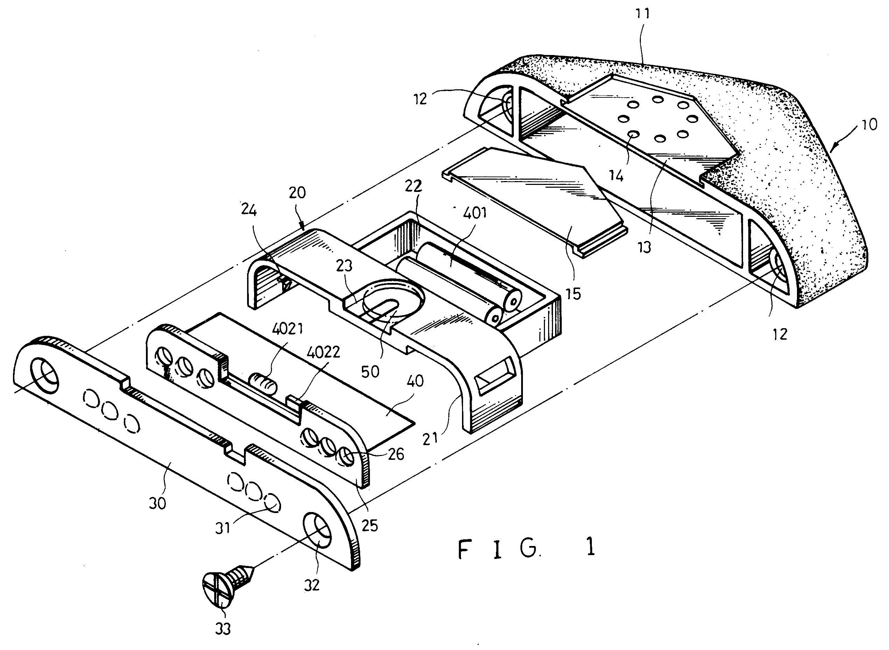

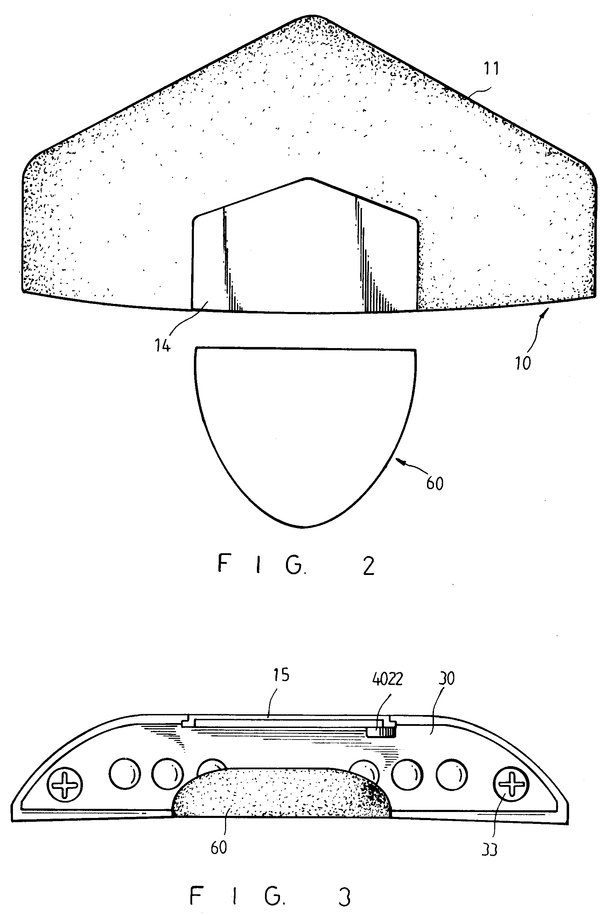

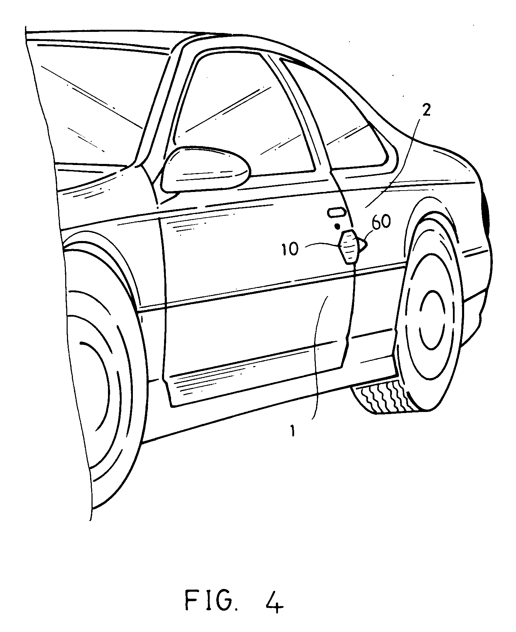

Referring to Figs.1 to 4, a multi-functional warning system for cars comprises a main module 10 mounted on the exterior of a car door 1 adjacent to an edge of the car door 1, and an auxiliary module 60 mounted on a car body 2 adjacent with the main module 10 when the car door 1 is properly closed. The main module 10 comprises a main casing 11, a support assembly 20, a convex lens plate 30, a printed circuit board 40 and a buzzer 50. The support assembly 20 is disposed within the main casing 11. The convex lens plate 30 is disposed on the rear portion of the main casing 11. A display seat 13 with a plurality of holes 14 is disposed on the top portion of the main casing 11. A display plate 15 is disposed on the display seat 13. Two threaded holes 12 are formed in the predetermined positions within the main casing 11. The support assembly 20 has a bridge-shaped cover 21 to cover the printed circuit board 40 thereunder and a cell container 22 to receive dry cells 401 therein. A reflection plate 25 which has a plurality of through holes 26 to receive light-emitted diodes 421 is disposed on the back of the support assembly 20. The bridge-shaped cover 21 has a buzzer seat 23 on its top to receive a buzzer 50 and two cotters 24 on its inner sides. The convex lens plate 30 has two screw holes 32 to receive two screws 33 respectively and a plurality of lens 31 to receive the light-emitted diodes 421 respectively. The printed circuit board 40 has a switch set 402 such as magnetic switch 4021 and magnetic switch 4022. The auxiliary module 60 is disposed on the rear portion of the main module 10.

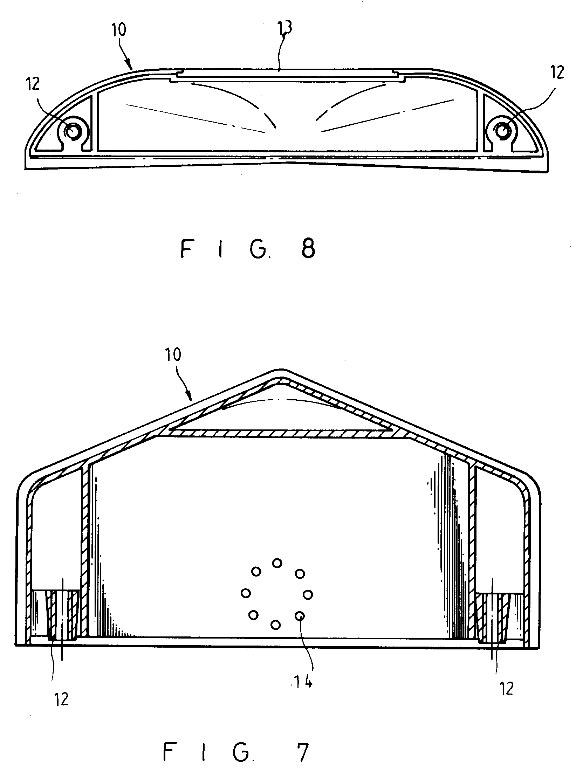

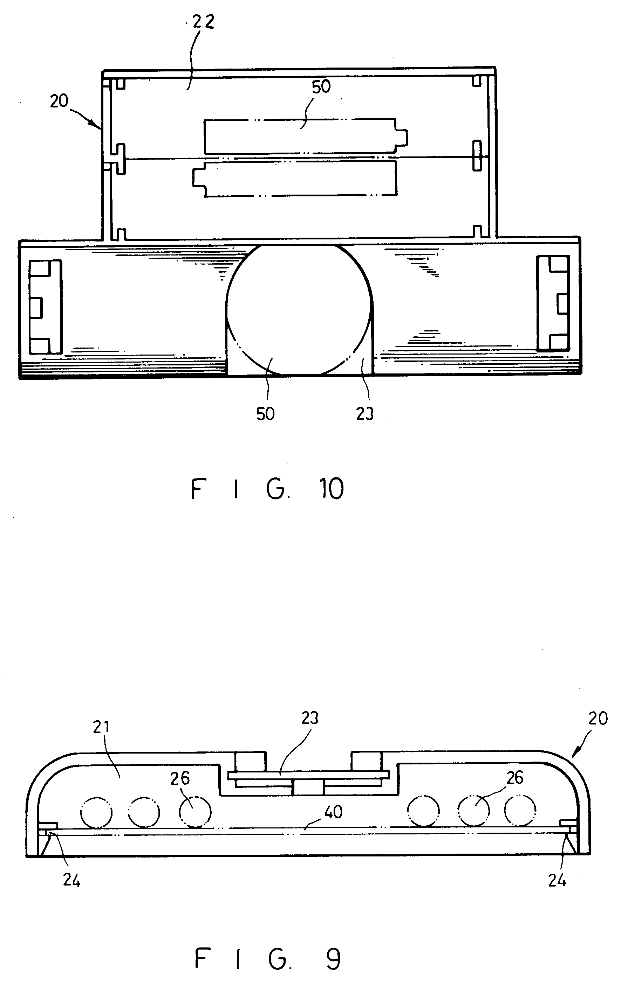

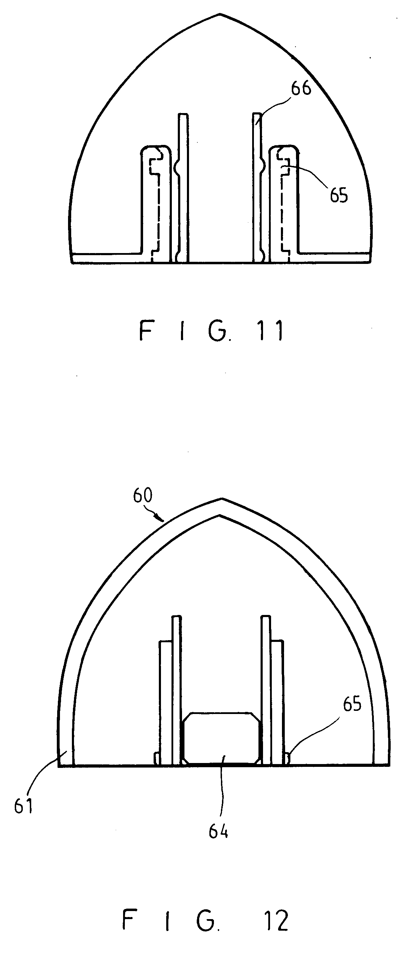

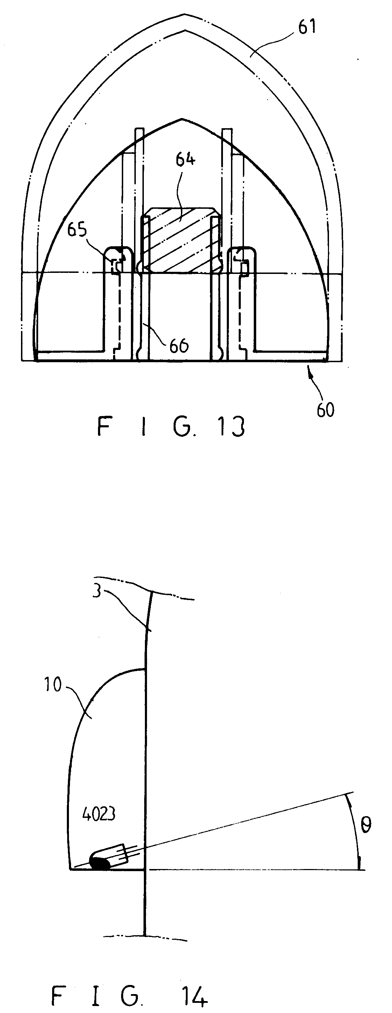

Referring to Figs.6 to 13, an adhesive pad 18 is disposed on the base 17 of the main module 10 and an adhesive pad 63 is disposed on the base 62 of the auxiliary module 60. The auxilary module 60 comprises an outer casing 61, a magnet 64, two cotters 65 and two sliding guides 66. Referring to Fig.14, the main module 10 with a mercury switch 4023 therein is disposed on the trunk lid 3.

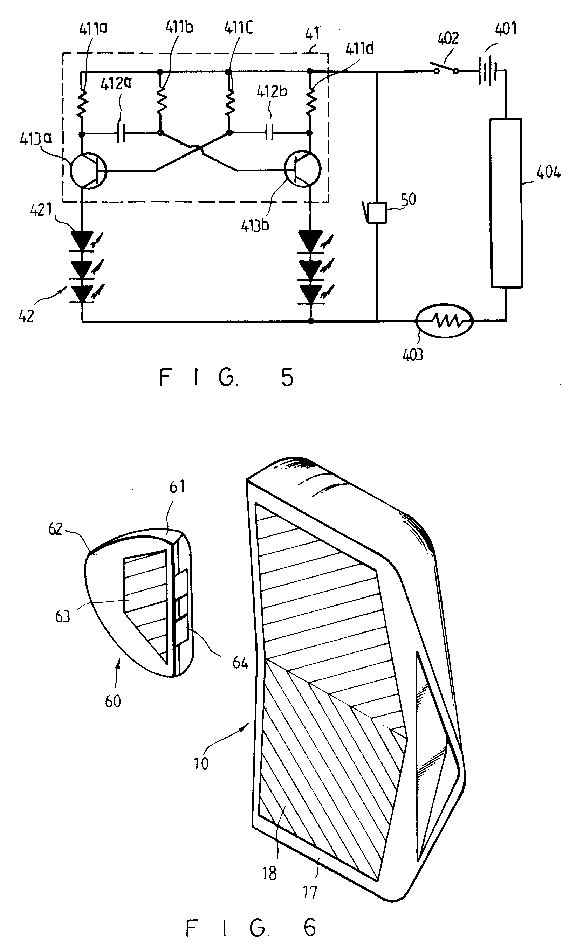

Referring to Fig.5, an electrical circuit comprises a switch set 402, a dry cell set 401, a solar energy collector 404 and a photo resistor 403 in series. The components within the area denoted by the dashed line box 41 are mounted on the printed circuit board 40. Magnetic switch 4021 which is normally open is closed only when the magnetic field is disappeared. When the car door 1 is opened, the magnetic field is disppeared . Thus the buzzer 50 adn light-emitted diodes 421 of the light-emitted diode set 42 which are controlled by the circuit in the printed circuit board 40 are then activated so that the buzzer 50 will produce a warning tone and the light-emitted diodes 421 will be lightened.

The light emitting diode controller circuit of printed circuit board 40 controls the light emitting diodes 421 and comprises a pair of switching transistors 413a and 413b, two pairs of resistors 411a, 411b, 411c, 411d and a pair of capacitors 412a, 412b.

The light emitting diodes 421 are connected in series between the emitters of respective switching transistors 413a, 413b and a second terminal of dry cell set 401. Current limiting resistors 411a, 411d are connected in series between the collectors of resepctive transistors 413a, 413b and the first terminal of dry cell set 401. The respective bases of transistors 413a, 413b are connected in parallel to a first terminal of resistor 411b and capacitor 412a, and a first terminal of resistor 411c and capacitor 412b respectively. The second terminal of capactiors 412a, 412b are connected respectively with the collectors of transistors 413a, 413b. The second terminal of resistors 411b, 411c are connected in parallel with the first terminal of dry cell set 401.

Resistor 411b and capacitor 412a, and resistor 411c and capacitor 412b, have equal time constants.

As would be apparent to one skilled in the art, upon the closure of magnetic switch 402, the light emitting diodes 421 would flash on and off, intermittently.

Main module 10 may be manually removed and re-mounted on another portion of car body 2, such as the trunk lid 3 and act as an emergency light and siren at night. Being separated from auxiliary module 60, buzzer 50 and light emitting diodes 421, as controlled by printed ciruit board 40, would, of course, automatically and continuously be active.

Furthermore, if perchance a glancing collision were to dislodge main module 10 and auxiliary module 60, no damage would be incurred by car body 2, as would be the case with a multi-functional warning system for cars that was mounted mechanically.

As an alternative embodiment of the present invention, a magnetic switch 4021 can be replaced by a manual switch 4022 or a mercury switch 4023. Likewise, other embodiments may use a different controller circuit providing alternate flashing patterns, or light sources other light emitting diodes may be implemented.

As such, the above description should serve only as a guideline with the actual scope of the present invention being defined by the claims below.

A multi-functional warning system for cars comprises a main module secured to a car door adjacent to an edge thereof, and an auxiliary module secured to the car body and adjacent with the main module, when the car door is in a closed position. The main module comprises a main casing, a support assembly, a convex lens plate, a printed circuit board and a buzzer. The support assembly is disposed within the main casing. The convex lens plate is disposed on the rear portion of the main casing. The printed circuit board has a switch set, a plurality of resistors, capacitors, switching transistors and light-emitted diodes.

## Claims

1. A warning system for cars comprising a main module mounted on an exterior of a car door adjacent to an edge thereof, and an auxiliary module mounted on a car body adjacent with said main module, wherein :
said main module comprises a main casing, a support assembly, a convex lens plate, a printed circuit board, a buzzer and a light source;
said support assembly is disposed within said main casing;
said convex lens plate is disposed on a rear portion of said main casing;
said printed circuit board comprises a switch set and a dry cell set;
said auxiliary module comprises a magnet;
whereby said convex lens plate has a plurality of lens to receive said light source.

2. A warning system for cars as claimed in claim 1, wherein said light source comprises at least two light emitting diodes.

3. A warning system for cars as claimed in claim 1, wherein said support assembly has a bridge-shaped cover and a cell container adjacent to said bridge-shaped cover.

4. A warning system for cars as claimed in claim 1, wherein said main module has an adhesive pad on a base surface of said main module and said auxiliary module has an adhesive pad on a base surface of said auxiliary module.

5. A warning system for cars as claimed in claim 1, wherein said switch set is a magnetic switch.

6. A warning system for cars as claimed in claim 1, wherein said switch set is a mercury switch.

7. A warning system for cars as claimed in claim 1, wherein said switch set is a manually operated switch.
